# EUROPÄISCHE PATENTANMELDUNG

(11) **EP 1 726 432 A1**
(43) Veröffentlichungstag der Anmeldung: **29.11.2006**
(21) Anmeldenummer: 05104330.5
(22) Anmeldetag: 23.05.2005
(51) Int. Cl.: B32B 13/04, C04B 28/00, C04B 28/02

(54) **Brandschutzbeschichtung für die Verwendung in einem Tunnel**

(71) Anmelder: Sika Technology AG, 6340 Baar (CH)
(72) Erfinder: Würmli, Fabio, 8800, Thalwil (CH); Schiegg, André, 8912, Obfelden (CH); Blank, Norman, 8803, Rüschlikon (CH)
(74) Vertreter: Isler, Jörg

(57) **Zusammenfassung**

Die vorliegende Erfindung betrifft das Gebiet der Brandschutzbeschichtungen, das heisst Beschichtungen mit hohen Brandwiderstandeigenschaften für Konstruktionen aus Beton, insbesondere für Tunnels. Die Erfindung betrifft eine Brandschutzbeschichtung auf einem festen mineralischen Untergrund U umfassend mindestens eine erste Schicht 1 einer ausgehärteten hydraulisch abbindenden Zusammensetzung, die Wasser, mindestens ein hydrogel-bildendes Polymer sowie mindestens ein hydraulisch abbindendes Bindemittel umfasst und mindestens eine zweite Schicht 2, die mindestens ein organisches Polymer umfasst. Wahlweise kann die erfindungsgemässe Brandschutzbeschichtung eine weitere Schicht 1' zwischen dem Untergrund U und der ersten Schicht 1 enthalten. Des weiteren betrifft die Erfindung die Verwendung einer Zusammensetzung umfassend eine feste Matrix, vorzugsweise ein hydraulische Bindemittel, und hydrogel-bildende Polymere als Brandschutzmittel.

## Beschreibung

### Technisches Gebiet

Die Erfindung betrifft das Gebiet der Brandschutzbeschichtungen, das heisst Beschichtungen mit hohen Brandwiderstandeigenschaften für Konstruktionen aus Beton, insbesondere für Tunnel. Des weiteren betrifft die Erfindung die Verwendung einer Zusammensetzung umfassend Wasser, eine feste Matrix, vorzugsweise hydraulische Bindemittel, und hydrogel-bildende Polymere als Brandschutzmittel.

### Stand der Technik

Brandschutzmaterialien für Konstruktionen aus Beton sind bekannt. So werden beispielsweise Kunststoff- oder Glasfasern, sowie Perlit oder Vermiculit in zementöse Systemen zugegeben, um den Brandwiderstand in einem Brandfall zu optimieren. EP 1'326'811 B1 beschreibt ein Material, welches aus einem hydraulisch abbindenden Gemisch enthaltend Calciumsilikat hergestellt ist.

Der Zusatz von hydrogel-bildenden Polymeren, auch Superabsorber-Polymere (SAP) genannt, zu hydraulischen Bindemitteln, wie zum Beispiel Mörtel, Zement oder Gips ist bekannt. WO 01/02317 A1 beschreibt ein Verfahren zur Schwindreduktion unter Verwendung eines Gemischs enthaltend ein hydraulisches Bindemittel und ein Wasserrückhaltemittel, z.B. Hydrogel. EP 1'329'435 A1 beschreibt eine Mischung aus hydrogel-bildenden Polymeren und hydraulisch abbindenden Baustoffen.

In der Bauchemie besteht ein grosses Bedürfnis, neue Brandschutzmaterialien bereitzustellen, die brandwiderstandsfähig sind und die einfach zu verarbeiten sind.

### Darstellung der Erfindung

Der vorliegenden Erfindung liegt die Aufgabe zugrunde, ein Brandschutzmittel bereitzustellen, das einem Brand über längere Zeit widerstehen kann, sowie eine Brandschutzbeschichtung bereitzustellen, die erhärtbar und spritzbar ist.

Diese Aufgabe wird gelöst durch ein Brandschutzmittel umfassend eine feste Matrix, vorzugsweise ein hydraulisches Bindemittel, und hydrogel-bildende Polymere, welche Wasser enthalten, sowie durch eine mehrschichtige Brandschutzbeschichtung.

Die vorliegende Erfindung betrifft daher eine Brandschutzbeschichtung gemäss den Merkmalen des Anspruchs 1. Insbesondere betrifft die vorliegende Erfindung eine Brandschutzbeschichtung auf einem festen mineralischen Untergrund umfassend mindestens eine erste Schicht einer ausgehärteten hydraulisch abbindenden Zusammensetzung, die Wasser, mindestens ein hydrogel-bildendes Polymer sowie mindestens ein hydraulisch abbindendes Bindemittel umfasst und mindestens eine zweite Schicht, die mindestens ein organisches Polymer umfasst, wobei die zweite Schicht umfassend ein organisches Polymer vorzugsweise auf der einem möglichen Brand zugewandten Seite angeordnet ist.

Unter Brandschutzmittel wird eine Zusammensetzung verstanden, vorzugsweise eine hydraulisch abbindende Zusammensetzung, die Wasser, mindestens ein hydrogel-bildendes Polymer sowie mindestens eine feste Matrix, vorzugsweise ein hydraulisch abbindendes Bindemittel, umfasst. Unter Brandschutzbeschichtung wird eine erfindungsgemässe mehrschichtige Beschichtung verstanden, die mindestens eine erste Schicht, die Wasser, mindestens ein hydrogel-bildendes Polymer sowie mindestens ein hydraulisch abbindendes Bindemittel umfasst, und mindestens eine zweite Schicht umfassend mindestens ein organisches Polymer, umfasst oder daraus besteht.

Der Vorteil der vorliegenden Erfindung liegt darin, dass die hydrogel-bildenden Polymere einen Teil des Anmachwassers speichern, welches bei erhöhter Temperatur im Falle eines Brandes verdampft und die Dampfphase, d.h. die Phase, bei der die Temperatur im Inneren und an der Oberfläche der Brandschutzbeschichtung bei einem Brand im Bereich der Siedetemperatur des Wassers, d.h. bei ungefähr 90 - 100°C bleibt, auf mindestens 10 Minuten, bevorzugt mindestens 20 Minuten, besonders bevorzugt auf mindestens 30 Minuten verlängert. Zusätzlich reduziert sich auch die Temperatur im Inneren der Brandschutzbeschichtung sowie auf der Oberfläche zwischen der ersten Schicht und dem Untergrund nach der Dampfphase und bleibt über längere Zeit, d.h. über 2 bis 3 Stunden auf unter 500°C, bevorzugt unter 400°C, besonders bevorzugt unter 300°C, und somit bleibt die Festigkeit der Brandschutzbeschichtung und dem darunter liegenden Material bei einem Brand über längere Zeit aufrecht erhalten.

Besonders vorteilhaft ist eine mehrschichtige Brandschutzbeschichtung mit mindestens einer ersten Schicht und mindestens einer zweiten Schicht, wobei die erste Schicht teilweise, vorzugsweise vollflächig von der zweiten Schicht bedeckt ist. Die zweite Schicht ermöglicht, dass das Wasser über längere Zeit in den hydrogel-bildenden Polymeren der ersten Schicht gespeichert werden kann. Durch die Beschichtung der ersten Schicht mit der zweiten Schicht wird erreicht, dass ein Teil, bevorzugt mindestens 20% oder mindestens 30%, besonders bevorzugt mindestens 40%, noch bevorzugter mindestens 50% des anfänglich von den hydrogel-bildenden Polymeren aufgenommene Wasser über längere Zeit, d.h. über mehrere Monate, bevorzugt über mehrere Jahre in den hydrogel-bildenden Polymeren der ersten Schicht gespeichert wird, und dass das Verdunsten des Wassers hinausgezögert werden kann. Vorzugsweise wird die zweite Schicht vollflächig auf der einem möglichen Brand zugewandten Seite der ersten Schicht aufgetragen. In einer weiteren Ausführungsform kann die zweite Schicht zusätzlich mindestens ein zumindest teilweise mit Wasser beladenes hydrogel-bildendes Polymer umfassen. Dies hat den Vorteil, dass bei einem Brand das Wasser verdampft und die Temperatur der Brandschutzbeschichtung noch länger tief gehalten werden kann.

Bei einer weiteren Ausführungsform werden mehrere Schichten des Brandschutzmittels übereinander auf den zu schützenden Untergrund aufgebracht. So können zum Beispiel mehrere erste Schichten und mehrere zweite Schichten aufgetragen werden, um noch einen besseren Schutz zu gewähren. Besonders vorteilhaft ist z.B., wenn auf den Untergrund eine erste Schicht, dann eine zweite, dann wieder eine erste und wieder eine zweite Schicht, d.h. abwechselnd eine erste und eine zweite Schicht aufgetragen wird. Die erfindungsgemässe Brandschutzbeschichtung kann auch aus einer ersten Schicht, die auf den Untergrund aufgetragen wird, dann aus einer zweiten Schicht umfassend mindestens ein zumindest teilweise mit Wasser beladenes hydrogel-bildendes Polymer, die auf die erste Schicht aufgetragen wird, und dann aus einer weiteren zweiten Schicht ohne hydrogel-bildende Polymere, die auf die zweite Schicht umfassend hydrogel-bildende Polymere aufgetragen wird, bestehen, oder die zweite Schicht ohne hydrogel-bildende Polymere kann auf die erste Schicht aufgetragen werden und anschliessend die zweite Schicht umfassend hydrogel-bildende Polymere auf die zweite Schicht ohne hydrogel-bildende Polymere aufgetragen werden.

Wahlweise kann die erfindungsgemässe Brandschutzbeschichtung eine weitere Schicht zwischen dem Untergrund und der ersten Schicht enthalten. Die weitere Schicht kann verwendet werden, damit die Zeit, über die ein Teil des anfänglich von den hydrogel-bildenden Polymeren aufgenommene Wasser gespeichert bleibt, verlängert wird und damit das Verdunsten des Wassers noch weiter hinausgezögert werden kann. In dieser Ausführungsform ist die erste Schicht somit beidseitig beschichtet, vorzugsweise beidseitig vollflächig bedeckt. Die weitere Schicht kann auch der besseren Haftung oder der Verstärkung von Betonkonstruktionen dienen.

Ein weiterer Vorteil der vorliegenden Erfindung besteht darin, dass die erste Schicht der erfindungsgemässen Brandschutzbeschichtung eine gute Haftung auf einem mineralischen Untergrund aufweist.

Die Erfindung betrifft weiter ein Verfahren zur Herstellung der Brandschutzbeschichtung sowie die Verwendung einer Zusammensetzung enthaltend Wasser, mindestens ein hydrogel-bildendes Polymer sowie mindestens ein hydraulisches Bindemittel als Brandschutzmittel, insbesondere für den Hoch- und Tiefbau. Besonders bevorzugt ist die Verwendung eines erfindungsgemässen Brandschutzmittels oder einer erfindungsgemässen Brandschutzbeschichtung für die Auskleidung von Tunnelinnenwänden bei einem Tunnelneubau oder bei der Renovation eines bereits bestehenden Tunnels.

Weitere vorteilhafte Ausgestaltungen der Erfindung ergeben sich aus den Unteransprüchen.

### Kurze Beschreibung der Zeichnung

Im folgenden wird anhand der Zeichnungen die Erfindung näher erläutert. Gleiche Elemente sind in den verschiedenen Figuren mit den gleichen Bezugszeichen versehen.

### Es zeigen:

- Fig.1:: Ein schematischer Querschnitt einer Brandschutzbeschichtung;
- Fig. 2:: Ein schematischer Tunnelquerschnitt;
- Fig. 3:: Graphische Darstellung des Temperaturverlaufs über die Zeit auf der Oberfläche eines Prüfkörpers einer hydraulisch abbindenden Zusammensetzung mit und ohne hydrogelbildenden Polymere, der einer Flamme von 1200°C ausgesetzt wird;
- Fig. 4:: Graphische Darstellung des Wasserrückhaltevermögens über die Zeit einer hydraulisch abbindenden Zusammensetzung mit hydrogel-bildenden Polymere mit und ohne Beschichtung mit einer zweiten Schicht verglichen mit einem herkömmlichen Brandschutzmörtel.

Es sind nur die für das unmittelbare Verständnis der Erfindung wesentlichen Elemente gezeigt.

### Wege zur Ausführung der Erfindung

Die vorliegende Erfindung betrifft eine Brandschutzbeschichtung auf einem festen mineralischen Untergrund umfassend mindestens eine erste Schicht einer ausgehärteten hydraulisch abbindenden Zusammensetzung, die Wasser, mindestens ein hydrogel-bildendes Polymer sowie mindestens ein hydraulisch abbindendes Bindemittel umfasst und mindestens eine zweite Schicht, die mindestens ein organisches Polymer umfasst, wobei die zweite Schicht bevorzugt auf der einem möglichen Brand zugewandten Seite der Brandschutzbeschichtung angeordnet ist.

Als fester Untergrund U eignet sich ein mineralischer Untergrund, besonders Felsgestein, Mauerwerke oder Betonkonstruktionen wie z.B. Betonmauern, Betonsäulen oder insbesondere Betonplatten, die z.B. für die Auskleidung von Tunnelwänden verwendet werden. Als Untergrund eignet sich insbesondere auch eine Schicht aus Spritzbeton, die z.B. zur Sicherung von Felsgestein aufgetragen wurde.

Die hydraulisch abbindende Zusammensetzung der ersten Schicht 1 umfasst mindestens ein hydraulisch abbindendes Bindemittel, insbesondere ein mineralisches Bindemittel wie z.B. Zement, Gips, Flugasche oder Schlacke. Bevorzugte hydraulische Bindemittel umfassen mindestens einen Zement, insbesondere mindestens einen Zement gemäss Euronorm EN 197 oder Calciumsulfat, in Form von Anhydrit, Halbhydrat- oder Dihydratgips; oder Calciumhydroxid. Bevorzugt sind Portlandzemente, Sulfoaluminatzemente und Tonerdeschmelzzemente, insbesondere Portlandzement. Mischungen von Zementen können zu besonders guten Eigenschaften führen. Für eine schnelle Aushärtung kommen vor allem zementöse Schnellbindemittel zum Einsatz, die vorzugsweise mindestens einen Tonerdeschmelzzement oder eine andere Aluminatquelle, wie beispielsweise aluminatspendende Klinker, und gegebenenfalls Calciumsulfat, in Form von Anhydrit, Halbhydrat- oder Dihydratgips; und/oder Calciumhydroxid enthalten. Als Bestandteil des hydraulischen Bindemittels wird Zement, insbesondere Portlandzement, bevorzugt.

Die hydraulisch abbindende Zusammensetzung der ersten Schicht 1 der erfindungsgemässen Brandschutzbeschichtung enthält neben hydraulisch abbindenden Bindemitteln hydrogel-bildende Polymere in einer solchen Menge, dass ihr Anteil, bezogen auf das Trockengewicht der hydraulisch abbindenden Zusammensetzung, das heisst bezogen auf das Gesamtgewicht der Zusammensetzung ohne Wasser, 0,01 bis 15 Gew.-%, bevorzugt 0,1 bis 10 Gew.-% und insbesondere bevorzugt 1 bis 5 Gew.-% beträgt.

Hydrogel-bildende Polymere sind insbesondere Polymere aus homopolymerisierten oder copolymerisierten hydrophilen Monomeren, Pfropf(co-)polymere von einem oder mehreren hydrophilen Monomeren auf eine geeignete Pfropfgrundlage, vernetzte Cellulose- oder Stärkeether, vernetzte Carboxymethylcellulose, teilweise vernetztes Polyalkylenoxid oder in wässrigen Flüssigkeiten quellbare Naturprodukte, wie beispielsweise Guarderivate, Alginate und Carrageenane.

Geeignete Pfropfgrundlagen können natürlichen oder synthetischen Ursprungs sein. Beispiele sind Stärke, Agar, Agarose, Dextran, Cellulose oder Cellulosederivate sowie andere Polysacharide und Oligosacharide, Polyvinylalkohol, Polyalkylenoxide, insbesondere Polyethylenoxide und Polypropylenoxide, Polyamine, Polyamide sowie hydrophile Polyester.

Bevorzugt sind als Hydrogel-bildende Polymere vernetzte Polymere mit Säuregruppen, die überwiegend in Form ihrer Salze, in der Regel Alkali- oder Ammoniumsalze, vorliegen. Derartige Polymere quellen bei Kontakt mit wässrigen Flüssigkeiten besonders stark zu Gelen auf.

Bevorzugt sind Polymere, die durch vernetzende Polymerisation oder Copolymerisation von säuregruppentragenden monoethylenisch ungesättigten Monomeren oder deren Salzen erhalten werden. Ferner ist es möglich, diese Monomere ohne Vernetzer zu homopolymerisieren oder copolymerisieren und nachträglich zu vernetzen.

Solche Säuregruppen tragenden Monomere sind beispielsweise monoethylenisch ungesättigte C3- bis C25-Carbonsäuren oder Anhydride wie Acrylsäure, Methacrylsäure, Ethacrylsäure, alpha -Chloracrylsäure, Crotonsäure, Maleinsäure, Maleinsäureanhydrid, Itaconsäure, Citraconsäure, Mesaconsäure, Glutaconsäure, Aconitsäure und Fumarsäure. Weiterhin kommen monoethylenisch ungesättigte Sulfon- oder Phosphonsäuren in Betracht, beispielsweise Vinylsulfonsäure, Allylsulfonsäure, Sulfoethylacrylat, Sulfomethacrylat, Sulfopropylacrylat, Sulfopropylmethacrylat, 2-Hydroxy-3-acryloxypropylsulfonsäure, 2-Hydroxy-3-methacryl-oxypropylsulfonsäure, Vinylphosphonsäure, Allylphosphonsäure, Styrolsulfonsäure und 2-Acrylamido-2-methylpropansulfonsäure. Die Monomeren können allein oder in Mischung untereinander eingesetzt werden.

Bevorzugt eingesetzte Monomere sind Acrylsäure, Methacrylsäure, Vinylsulfonsäure, Acrylamidopropansulfonsäure oder Mischungen dieser Säuren, z. B. Mischungen aus Acrylsäure und Methacrylsäure, Mischungen aus Acrylsäure und Acrylamidopropan-sulfonsäure oder Mischungen aus Acrylsäure und Vinylsulfonsäure. Ein besonders bevorzugt eingesetztes Monomeres ist Acrylsäure.

Zur Optimierung von Eigenschaften kann es sinnvoll sein, zusätzliche monoethylenisch ungesättigte Verbindungen einzusetzen, die keine Säuregruppen tragen, aber mit den säuregruppentragenden Monomeren copolymerisierbar sind. Hierzu gehören beispielsweise die Amide und Nitrile von monoethylenisch ungesättigten Carbonsäuren, z. B. Acrylamid, Methacrylamid und N-Vinylformamid, N-Vinylacetamid, N-Methylvinylacetamid, Acrylnitril und Methacrylnitril. Als Amide eignen sich beispielsweise Acrylsäure- und Methacrylsäureamide von alkoxylierten einwertigen, gesättigten Alkoholen, z. B. von Alkoholen mit 10 bis 25 C-Atome, d.h. alkoxylierte, insbesondere ethoxylierte und/oder propoxylierte Amine, wie sie beispielsweise unter dem Namen Jeffamine® von Huntsman kommerziell erhältlich sind. Weitere geeignete Verbindungen sind beispielsweise Vinylester von gesättigten C1- bis C4-Carbonsäuren wie Vinylformiat, Vinylacetat oder Vinylpropionat, Alkylvinylether mit mindestens 2 C-Atomen in der Alkylgruppe, wie z. B. Ethylvinylether oder Butylvinylether, Ester von monoethylenisch ungesättigten C3- bis C6-Carbonsäuren, z. B. Ester aus einwertigen C1- bis C18-Alkoholen und Acrylsäure, Methacrylsäure oder Maleinsäure, Halbester von Maleinsäure, z. B. Maleinsäuremono-methylester, N-Vinyllactame wie N-Vinylpyrrolidon oder N-Vinylcaprolactam, Acrylsäure- und Methacrylsäureester von alkoxylierten einwertigen, gesättigten Alkoholen, z. B. von Alkoholen mit 10 bis 25 C-Atome, die mit 2 bis 200 Mol Ethylenoxid und/oder Propylenoxid pro Mol Alkohol umgesetzt worden sind, sowie Monoacrylsäureester und Monomethacrylsäureester von Polyethylenglykol oder Polypropylenglykol, wobei die Molmassen (Mₙ) der Polyalkylenglykole beispielsweise bis zu 2000 g/mol betragen können. Weiterhin geeignete Monomere sind Styrol und alkylsubstituierte Styrole wie Ethylstyrol oder tert.-Butylstyrol.

Diese keine säuregruppentragenden Monomere können auch in Mischung mit anderen Monomeren eingesetzt werden, z. B. Mischungen aus Vinylacetat und 2-Hydroxyethylacrylat in beliebigem Verhältnis. Diese keine Säuregruppen tragenden Monomere werden der Reaktionsmischung in Mengen zwischen 0 und 50 Gew.-%, vorzugsweise kleiner 20 Gew.-% zugesetzt.

Bevorzugt werden vernetzte Polymere aus monoethylenisch ungesättigten C3- bis C12-Carbonsäuren und/oder deren Alkali- oder Ammoniumsalzen. Insbesondere werden vernetzte Polyacrylsäuren bevorzugt, deren Säuregruppen zu 5 bis 30 Mol%, vorzugsweise bei 5 bis 20 Mol%, besonders bevorzugt bei 5 bis 10 Mol%, bezogen auf die Säuregruppen enthaltenden Monomere als Alkali- oder Ammoniumsalze vorliegen.

Als Vernetzer können Verbindungen fungieren, die mindestens zwei ethylenisch ungesättigte Doppelbindungen aufweisen. Beispiele für Verbindungen dieses Typs sind N,N'-Methylenbisacrylamid, Polyethylenglykoldiacrylate und Polyethylenglykoldimethacrylate, die sich jeweils von Polyethylenglykolen eines Molekulargewichts von 106 bis 8500 g/mol, vorzugsweise 400 bis 2000 g/mol, ableiten, Trimethylolpropantriacrylat, Trimethylolpropantrimethacrylat, Ethylenglykoldiacrylat, Ethylenglykoldimethacrylat, Propylenglykoldiacrylat Propylenglykoldimethacrylat, Butandioldiacrylat, Butandioldimethacrylat, Hexandioldiacrylat, Hexandioldimethacrylat, Allylmethacrylat, Diacrylate und Dimethacrylate von Blockcopolymerisaten aus Ethylenoxid und Propylenoxid, zweifach bzw. mehrfach mit Acrylsäure oder Methacrylsäure veresterte mehrwertige Alkohole, wie Glycerin oder Pentaerythrit, Triallylamin, Dialkyldiallylammoniumhalogenide wie Dimethyldiallylammoniumchlorid und Diethyldiallylammoniumchlorid, Tetraallylethylendiamin, Divinylbenzol, Diallylphthalat, Polyethylenglykoldivinylether von Polyethylenglykolen eines Molekulargewichtes von 106 bis 4000 g/mol, Trimethylolpropandiallylether, Butandioldivinylether, Pentaerythrittriallylether, Umsetzungsprodukte von 1 Mol Ethylenglykoldiglycidylether oder Polyethylenglykoldiglycidylether mit 2 Mol Pentaerythritoltriallylether oder Allylalkohol, und/oder Divinylethylenharnstoff. Vorzugsweise setzt man wasserlösliche Vernetzer ein, z. B. N,N'-Methylenbisacrylamid, Polyethylenglykoldiacrylate und Polyethylenglykol-dimethacrylate, die sich von Additionsprodukten von 2 bis 400 Mol Ethylenoxid an 1 Mol eines Diols oder Polyols ableiten, Vinylether von Additionsprodukten von 2 bis 400 Mol Ethylenoxid an 1 Mol eines Diols oder Polyols, Ethylenglykoldiacrylat, Ethylenglykoldimethacrylat oder Triacrylate und Trimethacrylate von Additionsprodukten von 6 bis 20 Mol Ethylenoxid an 1 Mol Glycerin, Pentaerythrittriallylether und/oder Divinylharnstoff.

Als Vernetzer kommen ausserdem Verbindungen in Betracht, die mindestens eine polymerisierbare ethylenisch ungesättigte Gruppe und mindestens eine weitere funktionelle Gruppe enthalten. Die funktionelle Gruppe dieser Vernetzer muss in der Lage sein, mit den funktionellen Gruppen, im wesentlichen den Säuregruppen, der Monomeren zu reagieren. Geeignete funktionelle Gruppen sind beispielsweise Hydroxyl-, Amino-, Epoxi- und Aziridinogruppen. Verwendung finden können z. B. Hydroxyalkylester der oben genannten monoethylenisch ungesättigten Carbonsäuren, z. B. 2-Hydroxyethylacrylat, Hydroxypropylacrylat, Hydroxybutylacrylat, Hydroxyethylmethacrylat, Hydroxypropylmethacrylat und Hydroxybutylmethacrylat, Allylpiperidiniumbromid, N-Vinylimidazole wie z. B. N-Vinylimidazol, 1-Vinyl-2-methylimidazol und N-Vinylimidazoline wie N-Vinylimidazolin, 1-Vinyl-2-methylimidazolin, 1-Vinyl-2-ethylimidazolin oder 1-Vinyl-2-propylimidazolin, die in Form der freien Basen, in quaternisierter Form oder als Salz bei der Polymerisation eingesetzt werden können. Ausserdem eignen sich Dialkylaminoethylacrylat, Dimethylaminoethylmethacrylat, Diethylaminoethylacrylat und Diethylaminoethylmethacrylat. Die basischen Ester werden vorzugsweise in quaternisierter Form oder als Salz eingesetzt. Weiterhin kann z. B. auch Glycidyl(meth)acrylat eingesetzt werden.

Weiterhin kommen als Vernetzer Verbindungen in Betracht, die mindestens zwei funktionelle Gruppen enthalten, die in der Lage sind, mit den funktionellen Gruppen, im wesentlichen den Säuregruppen der Monomeren zu reagieren. Die hierfür geeigneten funktionellen Gruppen wurden bereits oben genannt, d. h. Hydroxyl-, Amino-, Epoxi-, Isocyanat-, Ester-, Amido- und Aziridinogruppen. Beispiele für solche Vernetzer sind Ethylenglykol, Diethylenglykol, Triethylenglykol, Tetraethylenglykol, Polyethylenglykol, Glycerin, Polyglycerin, Triethanolamin, Propylenglykol, Polypropylenglykol, Blockcopolymerisate aus Ethylenoxid und Propylenoxid, Ethanolamin, Sorbitanfettsäureester, ethoxylierte Sorbitanfettsäureester, Trimethylolpropan, Pentaerythrit, 1,3-Butandiol, 1,4-Butandiol, Polyvinylalkohol, Sorbit, Stärke, Polyglycidylether wie Ethylenglykoldiglycidylether, Polyethylenglykoldiglycidylether, Glycerindiglycidylether, Glycerinpolyglycidylether, Diglycerinpolyglycidylether, Polyglycerinpolyglycidylether, Sorbitpolyglycidylether, Pentaerythritpolyglycidylether, Propylenglykoldiglycidylether und Polypropylenglykoldiglycidylether, Polyaziridinverbindungen wie 2,2-Bishydroxymethylbutanoltris[3-(1-aziridinyl)-propionat], 1,6-Hexamethylendiethylenharnstoff, Diphenylmethan-bis-4,4'-N,N'-diethylenharnstoff, Halogenepoxyverbindungen wie Epichlorhydrin und alpha -Methylepifluorhydrin, Polyisocyanate wie 2,4-Toluylendiisocyanat und Hexamethylendiisocyanat, Alkylencarbonate wie 1,3-Dioxolan-2-on und 4-Methyl-1,3-dioxolan-2-on, weiterhin Bisoxazoline und Oxazolidone, Polyamidoamine sowie deren Umsetzungsprodukte mit Epichlorhydrin, ferner polyquaternäre Amine wie Kondensationsprodukte von Dimethylamin mit Epichlorhydrin, Homo- und Copolymere von Diallyldimethylammoniumchlorid sowie Homo- und Copolymerisate von Dimethylaminoethyl(meth)acrylat, die gegebenenfalls mit beispielsweise Methylchlorid quaterniert sind.

Weitere geeignete Vernetzer sind polyvalente Metallionen, die in der Lage sind, ionische Vernetzungen auszubilden. Beispiele für solche Vernetzer sind Magnesium-, Calcium-, Barium- und Aluminiumionen. Diese Vernetzer werden beispielsweise als Hydroxide, Carbonate oder Hydrogencarbonate eingesetzt. Weitere geeignete Vernetzer sind multifunktionelle Basen, die ebenfalls in der Lage sind, ionische Vernetzungen auszubilden, beispielsweise Polyamine oder deren quaternierte Salze. Beispiele für Polyamine sind Ethylendiamin, Diethylentriamin, Triethylentetramin, Tetraethylenpentamin, Pentaethylenhexamin und Polyethylenimine sowie Polyamine mit Molmassen von jeweils bis zu 4'000'000 g/mol.

Die Vernetzer sind in der Reaktionsmischung beispielsweise von 0,001 bis 20 und vorzugsweise von 0,01 bis 14 Gew.-% vorhanden.

Die Polymerisation wird wie allgemein üblich durch einen Initiator ausgelöst. Auch eine Initiierung der Polymerisation durch Einwirkung von Elektronenstrahlen auf die polymerisierbare, wässrige Mischung ist möglich. Die Polymerisation kann allerdings auch in Abwesenheit von Initiatoren der obengenannten Art durch Einwirkung energiereicher Strahlung in Gegenwart von Photoinitiatoren ausgelöst werden. Als Polymerisationsinitiatoren können sämtliche unter den Polymerisationsbedingungen in Radikale zerfallende Verbindungen eingesetzt werden, z. B. Peroxide, Hydroperoxide, Wasserstoffperoxide, Persulfate, Azoverbindungen und die sogenannten Redoxkatalysatoren. Bevorzugt ist der Einsatz von wasserlöslichen Initiatoren. In manchen Fällen ist es vorteilhaft, Mischungen verschiedener Polymerisationsinitiatoren zu verwenden, z. B. Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden. Geeignete organische Peroxide sind beispielsweise Acetylacetonperoxid, Methylethylketonperoxid, tert.-Butylhydroperoxid, Cumolhydroperoxid, tert.-Amylperpivalat, tert.-Butylperpivalat, tert.-Butylperneohexanoat, tert.-Butylperisobutyrat, tert.-Butylper-2-ethylhexanoat, tert.-Butylperisononanoat, tert.-Butylpermaleat, tert.-Butylperbenzoat, Di-(2-ethylhexyl)peroxidicarbonat, Dicyclohexylperoxidicarbonat, Di-(4-tert.-butylcyclohexyl)peroxidicarbonat, Dimyristilperoxidicarbonat, Diacetylperoxi-dicarbonat, Allylperester, Cumylperoxyneodecanoat, tert.-Butylper-3,5,5-trimethylhexanoat, Acetylcyclohexylsulfonylperoxid, Dilaurylperoxid, Dibenzoylperoxid und tert.-Amylperneodekanoat. Besonders geeignete Polymerisationsinitiatoren sind wasserlösliche Azostarter, z. B. 2,2'-Azobis-(2-methylpropionitril), 2,2'-Azo-bis-(2-amidinopropan)dihydrochlorid, 2,2'-Azobis-(N,N'-dimethylen)isobutyramidin-dihydrochlorid, 2-(Carbamoylazo)-isobutyronitril, 2,2'-Azobis[2-(2'-imidazolin-2-yl)propan]dihydrochlorid und 4,4'-Azobis-(4-cyanovaleriansäure). Die genannten Polymerisationsinitiatoren werden in üblichen Mengen eingesetzt, z. B. in Mengen von 0,01 bis 5, vorzugsweise 0,05 bis 2,0 Gew.-%, bezogen auf die zu polymerisierenden Monomeren.

Die vernetzten Polymere werden vorzugsweise teilneutralisiert eingesetzt. Der Neutralisationsgrad beträgt bevorzugt 5 bis 60 Mol%, vorzugsweise 10 bis 40 Mol%, besonders bevorzugt 20 bis 30 Mol%, bezogen auf die Säuregruppen enthaltenden Monomere. Als Neutralisationsmittel kommen in Frage: Alkalimetallbasen oder Ammoniak bzw. Amine. Vorzugsweise wird Natronlauge, Kalilauge oder Lithiumhydroxid verwendet. Die Neutralisation kann jedoch auch mit Hilfe von Natriumcarbonat, Natriumhydrogencarbonat, Kaliumcarbonat oder Kaliumhydrogencarbonat oder anderen Carbonaten oder Hydrogencarbonaten oder Ammoniak vorgenommen werden. Darüberhinaus sind prim., sek. und tert. Amine einsetzbar.

Alternativ kann die Einstellung des Neutralisationsgrades vor, während oder nach der Polymerisation in allen dafür geeigneten Apparaturen vorgenommen werden. Die Neutralisation kann beispielsweise bei Verwendung eines Kneters zur Polymerisation auch direkt hierin vorgenommen werden.

Als technische Verfahren zur Herstellung dieser Produkte können alle Verfahren Anwendung finden, die üblicherweise bei der Herstellung von Superabsorbern eingesetzt werden, wie sie z. B. im Kapitel 3 in "Modern Superabsorbent Polymer Technology", F.L. Buchholz and A.T. Graham, Wiley-VCH, 1998, erläutert sind.

Die ausgehärtete hydraulisch abbindende Zusammensetzung enthält bevorzugt mindestens ein hydrogel-bildendes Polymer, das vollständig oder teilweise durch Wasser aufgequollen ist, d.h. in nassem oder teilweise nassem Zustand vorliegt.

Als bevorzugte hydrogel-bildende Polymere haben sich solche Polymere erwiesen, welche mehr als das fünffache, vorzugsweise mehr als das zehnfache und weniger als das hundertfache, vorzugsweise weniger als das sechzigfache des eigenen Gewichts an Flüssigkeit, vorzugsweise Wasser, aufnehmen können. Das heisst, dass 1g hydrogel-bildendes Polymer bevorzugt 1g bis 100g Flüssigkeit, noch mehr bevorzugt 5g bis 80g Flüssigkeit, besonders bevorzugt 10g bis 60g Flüssigkeit, vorzugsweise Wasser, aufnehmen kann.

Die hydraulisch abbindende Zusammensetzung der ersten Schicht 1 der erfindungsgemässen Brandschutzbeschichtung kann neben hydraulischen Bindemittel und hydrogel-bildenden Polymeren weitere Zusatzmittel enthalten. Als Zusatzmittel können beliebige flüssige oder pulverförmige Betonzusatzmittel verwendet werden. Vorteilhaft ist die Verwendung von Beschleunigern, Korrosionsinhibitoren, Verflüssigern, Verdickern, Verzögerern, Schwindreduzierern, Entschäumern, usw. Solche Zusatzmittel, wie Erstarrungsbeschleuniger, Korrosionsinhibitoren, Verflüssiger, usw. sind allgemein bekannt. Für das Spritzen von Beton sind insbesondere Beschleuniger wichtig, welche von Sika® z.B. unter dem Namen Sigunit® vertrieben werden. Als Verflüssiger oder Verzögerer können beispielsweise solche verwendet werden, welche von Sika® z.B. unter dem Namen ViscoCrete® vertrieben werden.

Als Korrosionsinhibitoren können z.B. Alkanolamine, Alkohole, organische Säuren, Phosphonate verwendet werden. Als Alkanolamine sind insbesondere Ethanolamine oder N-alkylierte Ethanolamine geeignet, bevorzugt ausgewählt aus der Gruppe umfassend Monoethanolamin, Diethanolamin, Triethanolamin, N-Methyldiethanolamin, N,N-Dimethylethanolamin sowie Mischungen davon.

Zusätzlich enthält die hydraulisch abbindende Zusammensetzung der ersten Schicht 1 Zuschlagsstoffe wie zum Beispiel Kies, Sand, Quarz, aber auch Blähton, Bims, Polystyrol, Perlit oder Vermiculit. Besonders bevorzugte Zuschlagsstoffe für eine Brandschutzbeschichtung sind Perlit oder Vermiculit, welche die Wärmeleitfähigkeit verbessern.

In einer weiteren bevorzugten Ausführungsform der Erfindung umfasst die erste Schicht 1 der Brandschutzbeschichtung weitere Zusätze mit hohen Brandschutzeigenschaften, wie z.B. Fasern wie Glas- oder Kunststofffasern, insbesondere Polyethylen- oder Polypropylenfasern, andere Kunststoffadditive, Graphit, insbesondere aufgeblähtes Graphit, oder Calciumsilikate wie z.B. Xonotlit.

Die hydraulisch abbindende Zusammensetzung der ersten Schicht 1 liegt bevorzugt als Spritzbeton oder Spritzmörtel vor.

Die zweite Schicht 2 der erfindungsgemässen Brandschutzbeschichtung umfasst mindestens ein organisches Polymer oder besteht aus organischem Polymer. Vorzugsweise besteht die zweite Schicht 2 zu mindestens 50 Gew.%, bevorzugt zu mindestens 60 Gew.%, noch mehr bevorzugt zu mindestens 70 oder 80 Gew.%, oder sogar zu 100 Gew.%, bezogen auf das Gesamtgewicht der zweiten Schicht, aus organischem Polymer.

Als geeignete organische Polymere gelten insbesondere solche organische Polymere, welche durch radikalische Polymerisation oder Additionspolymerisation von Monomeren oder Oligomeren erhalten werden. Ein über radikalische Polymerisation erhaltenes bevorzugtes Polymer ist ein Homo- oder Copolymer von ungesättigten Doppelbindungen aufweisenden Monomeren, insbesondere von solchen, welche ausgewählt sind aus der Gruppe umfassend (Meth)acrylsäure, (Meth)acrylsäureester, Säuren und Ester von ungesättigten Dicarbonsäuren, Vinylester, Vinylalkohole, Styrol, Ethen, Propen, Buten, Butadien, und Acrylonitril sowie deren einfach oder mehrfach halogenierten Analoga. Die Polymerisation der Monomere erfolgt mittels eines Radikalinitiators, insbesondere Peroxide oder Hydroperoxide. Besonders bevorzugt sind Homo- und Copolymere von Vinylacetat. Details zur Herstellung dieser Polymere sind dem Fachmann der radikalischen Polymerisation von ungesättigten Monomeren bekannt. Der Auftrag kann durch gleichzeitiges Auftragen und Mischen der Monomere und des Radikalinitiators erfolgen oder unmittelbar nach dem Mischen von Monomer und Radikalinitiators. Der Auftrag der zweiten Schicht 2 auf die erste Schicht 1 der erfindungsgemässen Brandschutzbeschichtung kann durch Sprühen, Rollen, Aufpinseln oder Beschichten erfolgen. Besonders bevorzugt ist der Sprüh-Auftrag, insbesondere mittels einer zweikomponentigen Sprühpistole.

Ein über Additionspolymerisation erhaltenes Polymer ist insbesondere ein ausgehärtetes Epoxidharz, Polyurethan oder Polyester.
Geeignete Polyurethane sind erhältlich durch die Reaktion von Polyisocyanaten oder Isocyanat-Gruppen-haltige Prepolymere und Wasser, insbesondere als Luftfeuchtigkeit oder aus der ersten Schicht stammend, oder mit Polyolen und/oder Polyaminen.
Als Polyisocyanate eignen sich insbesondere zwei- oder mehrwertige, mono- und/oder oligomere aliphatische, cycloaliphatische und aromatische Isocyanate wie beispielsweise 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3- und -1,4-diisocyanat und beliebige Gemische dieser Isomeren, 1-Isocyanato-3,3,5-trimethyl-5-isocyanatomethylcyclohexan (=Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), 1,3,5-Tris-(isocyanatomethyl)-benzol, m- und p-Tetramethyl-1,3- und -1,4-xylylendiisocyanat (m- und p-TMXDI), Bis-(1-Isocyanato-1-methylethyl)-naphthalin, α,α,α',α',α",α"-Hexamethyl-1,3,5-mesitylentriisocyanat, Dimer- und Trimerfettsäureisocyanate wie 3,6-Bis-(9-isocyanatononyl)-4,5-di-(1-heptenyl)-cyclohexen (Dimeryldiisocyanat), 2,4- und 2,6-Toluylendiisocyanat (TDI) und beliebige Gemische dieser Isomeren, 4,4'-, 2,4'- und 2,2'-Diphenylmethandiisocyanat (MDI) und beliebige Gemische dieser Isomeren, Mischungen aus 4,4'-, 2,4'- und 2,2'-Diphenylmethandiisocyanaten und Polyphenyl-polymethylen-polyisocyanaten (Roh-MDI), 1,3- und 1,4-Phenylendiisocyanat, 2,3,5,6-Tetramethyl-1 ,4-diisocyanatobenzol, Naphthalin-1,5-diisocyanat (NDI), 3,3'-Dimethyl-4,4'-diisocyanatodiphenyl (TODI), Tris-(4-isocyanatophenyl)-methan, Tris-(4-isocyanatophenyl)-thiophosphat; Oligomere dieser Isocyanate enthaltend Uretdion-, Isocyanurat- oder Iminooxadiazindiongruppen; modifizierte zwei- und mehrwertige Isocyanate enthaltend Ester-, Harnstoff-, Urethan-, Biuret-, Allophanat-, Carbodiimid-, Uretonimin- oder Oxadiazintriongruppen.

Isocyanat-Gruppen haltige Prepolymere sind Reaktionsprodukte der genannten Polyisocyanate mit zwei- oder mehr Hydroxylgruppen aufweisenden Polyolen, wie beispielsweise zwei- oder mehrwertigen Alkoholen, Glykolen oder Aminoalkoholen, polyhydroxyfunktionellen Polyethern, Polyestern, Polyacrylaten oder Polycarbonaten, insbesondere Polyoxyalkylenpolyolen. Diese Reaktion der Herstellung von Isocyanat-Gruppen aufweisenden Prepolymeren ist dem Fachmann aus der Polyurethanchemie geläufig und erfolgt typischerweise in leicht erhöhtem stöchiometrischen Überschuss der Isocyanatgruppen gegenüber den Hydroxylgruppen.
Bevorzugte Polyole sind Polyoxyalkylenpolyole, auch Polyetherpolyole genannt, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol-A, hydriertes Bisphenol-A, 1,1,1-Trimethylolethan, 1,1,1-Trimethylolpropan, Glycerin, Anilin sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten.
Als Polyamine eignen sich insbesondere Ethylendiamin, 1,2- und 1,3-Propandiamin, 2-Methyl-1,2-propandiamin, 2,2-Dimethyl-1,3-propandiamin, 1,3- und 1,4-Butandiamin, 1,3- und 1,5-Pentandiamin, 1,6-Hexamethylendiamin, 2,2,4- und 2,4,4-Trimethylhexamethylendiamin und Mischungen davon, 1,7-Heptandiamin, 1,8-Octandiamin, 4-Aminomethyl-1,8-octandiamin, 1,9-Nonandiamin, 1,10-Decandiamin, 1,11-Undecandiamin, 1,12-Dodecandiamin, Methyl-bis-(3-aminopropyl)amin, 1,5-Diamino-2-methylpentan (MPMD), 1,3-Diaminopentan (DAMP), 2,5-Dimethyl-1,6-hexamethylendiamin, cycloaliphatische Polyamine wie 1,2-, 1,3- und 1,4-Diaminocyclohexan, Bis-(4-aminocyclohexyl)-methan, Bis-(4-amino-3-methylcyclohexyl)-methan, Bis-(4-amino-3-ethylcyclohexyl)-methan, Bis-(4-amino-3,5-dimethylcyclohexyl)-methan, 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 1,3,5-Tris-(aminomethyl)cyclohexan, 1-Cyclohexylamino-3-aminopropan, 2,5(2,6)-Bis-(aminomethyl)-bicyclo[2.2.1]heptan (NBDA, hergestellt von Mitsui Chemicals), 3(4),8(9)-Bis-(aminomethyl)-tricyclo[5.2.1.0^{2,6}]decan, 1,4-Diamino-2,2,6-trimethylcyclohexan (TMCDA), 3,9-Bis-(3-aminopropyl)-2,4,8,10-tetraoxaspiro[5.5]undecan, 1,3-und 1,4-Xylylendiamin, 1,3,5-Tris-(aminomethyl)benzol, Ethergruppen-haltige aliphatische Polyamine wie Bis-(2-aminoethyl)ether, 4,7-Dioxadecan-1,10-diamin, 4,9-Dioxadodecan-1,12-diamin und höhere Oligomere davon, Polyoxyalkylen-Polyamine mit theoretisch zwei oder drei Aminogruppen, erhältlich beispielsweise unter dem Namen Jeffamine® (hergestellt von Huntsman Chemicals).
Die Reaktion der Polyisocyanate oder Isocyanat-Gruppen-haltigen Prepolymeren können einerseits mit Wasser erfolgen. Hierbei wird die Polyisocyanate oder Isocyanat-Gruppen-haltige Prepolymere umfassende Zusammensetzung auf die Oberfläche der ersten Schicht 1 appliziert. Anschliessend erfolgt eine Aushärtung der Polyisocyanate oder Isocyanat-Gruppen-haltigen Prepolymeren mit dem Wasser, welches als Luftfeuchtigkeit aus der Umgebungsluft stammt oder mit dem Wasser, welches aus der ersten Schicht 1 stammt. Diese Variante hat den grossen Vorteil, dass eine sogenannte einkomponentige Polyurethanzusammensetzung verwendet werden kann und kein vorgängiges Mischen nötig ist. Der Auftrag der zweiten Schicht 2 auf die erste Schicht 1 der erfindungsgemässen Brandschutzbeschichtung kann durch Sprühen, Rollen, Aufpinseln oder Beschichten erfolgen. Besonders bevorzugt ist der Sprüh-Auftrag.

Die Reaktion der Polyisocyanate oder Isocyanat-Gruppen-haltigen Prepolymeren kann andererseits mit Polyaminen und/oder Polyolen erfolgen. Hierbei werden die Polyole/und oder Polyamine unmittelbar vor der Applikation in einer dem Fachmann für zweikomponentige Polyurethanchemie bekannten Art und Weise gemischt und appliziert und ausgehärtet.
Der Auftrag kann durch gleichzeitiges Auftragen und Mischen der Polyisocyanate oder Isocyanat-Gruppen-haltigen Prepolymeren und des Polyamins oder Polyols erfolgen oder unmittelbar nach deren Mischen. Der Auftrag der zweiten Schicht 2 auf die erste Schicht 1 der erfindungsgemässen Brandschutzbeschichtung kann durch Sprühen, Rollen, Aufpinseln oder Beschichten erfolgen. Besonders bevorzugt ist der Sprüh-Auftrag, insbesondere mittels einer zweikomponentigen Sprühpistole.

Geeignete Polyester werden aus Polyolen und Dicarbonsäuren hergestellt. Als Polyole kommen insbesondere die für die Polyurethane bereits beschriebenen Polyole zur Anwendung.

Geeignete ausgehärtete Epoxidharzen werden aus der Reaktion von sogenannten Epoxidharzen mit Härtern erhalten. Geeignete Epoxidharze sind insbesondere derartige, welche auf Basis von Diglycidylethern von Bisphenol-A, F und A/F basieren. Als besonderes bevorzugte Epoxidharze gelten Flüssigharze. Beispielhaft für ein derartiges Flüssigharz sei Araldite® GY-250 von Huntsman genannt. Typischerweise umfassen Epoxydharzen zusätzlich noch nieder viskose Epoxy-Gruppen tragende Verbindungen, sogenannte Epoxy-Reaktivverdünner.
Besonders bevorzugt werden Phosphoratome enthaltende oder zumindest teilweise halogenierte Derivate von Epoxydharzen und/oder Epoxy-Reaktivverdünner verwendet. Beispiele für derartige zumindest teilweise halogenierte Epoxydharze und/oder Epoxy-Reaktivverdünner sind bromierte Epoxyharze wie sie beispielsweise als D.E.R. 593 von Dow Chemicals oder Bakelite® EPR 500 von Bakelite kommerziell erhältlich sind. Beispiele für Phosphoratome enthaltende Epoxydharze sind beispielsweise solche, wie sie in US 6,548 627 erwähnt sind.
Als Härter sind insbesondere Polyamine, insbesondere die bereits bei den Polyurethanen genannten Polyamine, sowie Polymerkaptane geeignet.
Das Epoxidharz wird mit dem Härter gemischt und appliziert. Der Auftrag kann durch gleichzeitiges Auftragen und Mischen der Polyisocyanate oder Isocyanat-Gruppen-haltigen Prepolymeren und des Polyamins oder Polyols erfolgen oder unmittelbar nach deren Mischen. Der Auftrag kann durch Sprühen, Rollen oder Beschichten erfolgen. Besonders bevorzugt ist der Sprüh-Auftrag, insbesondere nach dem Mischen der zwei Komponenten.

Die Epoxidharze lassen sich jedoch auch mittels Hitze aushärten. Hierbei werden insbesondere Substanzen beigemischt, die bei erhöhter Temperatur eine Homopolymerisation der Epoxy-Gruppen auslösen oder die bei erhöhter Temperatur eine Polyamin oder Polymerkaptan freisetzen. Eine besonders bevorzugte derartige Substanz ist Dicyanamid (Dicy). Die benötigten Misch-Stöchiometrie und Details zur Herstellung der derartigen Epoxidharz-basierenden Zusammensetzungen ist dem Fachmann aus der Epoxidharzchemie bestens bekannt.

Das organische Polymer umfasst vorzugsweise Substanzen, welche die Brennbarkeit dieser zweiten Schicht reduzieren. Diese Substanzen können als Zusätze in der Polymerschicht eingebracht sein, oder sind in das Polymer durch chemische Bindungen eingebaut.

Die zweite Schicht 2 kann neben einem organischen Polymer weitere Substanzen, insbesondere Füllstoffe oder andere geeignete Hilfsstoffe umfassen. Die zweite Schicht 2 ist vorzugsweise zementfrei. Vorzugsweise ist die zweite Schicht 2 bei Temperaturen unter 100°C diffusionsdicht. In einer weiteren Ausführungsform kann die zweite Schicht 2 mindestens ein hydrogel-bildendes Polymer in zumindest teilweise mit Wasser beladenen Form umfassen. Es können die selben hydrogel-bildenden Polymere wie für die erste Schicht 1 verwendet werden.

Als mineralischer Untergrund U kommt vorzugsweise natürlich vorkommendes Gestein, eine Mauer oder Beton in Frage, insbesondere Betonplatten oder eine Betonbeschichtung besonders in Form von Spritzbeton, wie sie zum Beispiel für den Tunnelbau verwendet werden.

In einem weiteren Aspekt betrifft die vorliegende Erfindung ein Verfahren zur Herstellung einer erfindungsgemässen Brandschutzbeschichtung, wobei zur Herstellung der ersten Schicht 1 die hydraulisch abbindende Zusammensetzung umfassend hydrogel-bildende Polymere und hydraulische Bindemittel mit Wasser vermengt werden, die erste Schicht 1 im nassen Zustand auf den festen Untergrund U aufgetragen wird, und die zweite Schicht 2 auf die erste Schicht 1 aufgetragen wird.

Das hydrogel-bildende Polymer kann sowohl in trockener, wie auch in nasser, d.h. mit Wasser beladenen oder aufgequollener, oder in teilweise nasser, d.h. mit Wasser angequollener oder teilweise mit Wasser beladenen Form vorliegen. Das trockene oder nasse hydrogel-bildende Polymer kann einem zuvor angemachten hydraulisch abbindenden Bindemittel/Wassergemisch zugegeben werden. Der Vorteil von trockenen oder teilweise nassen hydrogel-bildenden Polymeren liegt darin, dass sie noch weiter Wasser aufnehmen können und somit das Ansteifen der hydraulisch abbindenden Zusammensetzung beschleunigen. In einer bevorzugten Ausführungsform liegt trockenes hydrogel-bildendes Polymer und trockenes hydraulisch abbindendes Bindemittel in der trockenen hydraulisch abbindenden Zusammensetzung vor, welche dann mit Wasser vermischt wird.

Im Falle eines Spritzbetons können die hydrogel-bildenden Polymere, insbesondere nasse hydrogel-bildende Polymere kurz vor dem Spritzen, d.h. kurz vor dem Austritt des Gemischs aus Wasser und dem Rest der hydraulisch abbindenden Zusammensetzung aus der Spritzdüse, dem Gemisch hinzugefügt werden.

Für die Verarbeitung der trockenen hydraulisch abbindenden Zusammensetzung wird eine benötigte Menge Wasser zugegeben und die Mischung verarbeitet. Die Menge des benötigten Wassers für die trockene hydraulisch abbindende Zusammensetzung ohne hydrogel-bildende Polymere richtet sich in erster Linie nach dem vom Fachmann üblich verwendeten Wasser/Zement-Verhältnis. Je nach Menge an zugegebenen hydrogel-bildenden Polymere erhöht sich die Menge an zugegebenen Wasser. Die hydrogel-bildenden Polymere können ein Mehrfaches ihres Eigengewichts an Wasser auf nehmen, bevorzugt das zehnfache oder zwanzigfache ihres Eigengewichts, aber sie können auch das vierzig- oder sechzigfache ihres Eigengewichts an Wasser aufnehmen. Ein Teil des Wassers wird für die Verarbeitung und die Zementabbindereaktion verwendet, der andere Teil wird von den hydrogel-bildenden Polymere aufgesaugt. Nach dem Kontakt mit Wasser härtet die hydraulisch abbindenden Zusammensetzung aus.

Die hydraulisch abbindende Zusammensetzung der ersten Schicht 1 wird noch im nassen Zustand auf den festen mineralischen Untergrund U aufgetragen. Entweder wird die hydraulisch abbindende Zusammensetzung direkt auf den Untergrund aufgetragen, oder eine weiteren Schicht 1' wie z.B. ein Primer wird zuerst auf den Untergrund U aufgetragen und danach wird die hydraulisch abbindende Zusammensetzung auf die weitere Schicht 1' aufgetragen. Die erste Schicht 1 ist bevorzugt ein Spritzbeton oder Spritzmörtel, der entweder im Trocken- oder im Nassverfahren auf den Untergrund U oder die weitere Schicht 1' aufgetragen werden kann. Im Trockenverfahren wird das hydraulische Bindemittel und die Zusatz- und Zuschlagsstoffe erst mit dem Wasser vermischt kurz bevor sie die Spritzdüse verlassen. Im Nassverfahren werden alle Inhaltsstoffe einschliesslich Wasser vor dem Spritzen vermischt. Bevorzugt ist das Nassspritzverfahren.

Der Primer der Schicht 1' kann ein zementöser Primer sein oder ein organischer Primer. Beim organischen Primer werden insbesondere Primer mit Alkoxygruppen aufweisenden Silane als Haftvermittlersubstanzen bevorzugt.

Nach dem Auftragen der ersten Schicht 1 auf den Untergrund U wird die zweite Schicht 2 auf die erste Schicht 1 aufgetragen. Das Auftragen der zweiten Schicht 2 kann erfolgen, kurz nachdem die erste Schicht aufgetragen ist, z.B. wenn die Schicht 1 noch nicht ausgehärtet ist oder etwas später, wenn die Schicht 1 bereits ausgehärtet ist. Bevorzugt wird die zweite Schicht 2 weniger als 48 Stunden nach Auftragen der ersten Schicht 1 aufgetragen, besonders bevorzugt nach weniger als 24 Stunden oder nach weniger als 12 Stunden. In einer bevorzugten Ausführungsform wird die zweite Schicht 2 auf die erste Schicht 1 aufgespritzt, welche bevorzugt noch nicht ausgehärtet ist. In einer weiteren bevorzugten Ausführungsform wird die zweite Schicht 2 auf die erste Schicht 1 aufgestrichen.

Des weiteren betrifft die vorliegende Erfindung eine Verwendung einer Zusammensetzung, vorzugsweise einer hydraulisch abbindenden Zusammensetzung als Brandschutzmittel, wobei die Zusammensetzung mindestens eine feste Matrix, vorzugsweise ein hydraulisches Bindemittel, sowie ein zumindest teilweise mit Wasser beladenes hydrogel-bildendes Polymer umfasst.

Die feste Matrix kann auch mindestens ein organisches Polymer umfassen oder daraus bestehen. Als organisches Polymer kommt ein Polymer in Frage wie vorangehend für die zweite Schicht 2 der Brandschutzbeschichtung beschrieben, mit der Vorgabe, dass dieses Polymer aus Oligomeren und Monomeren erhalten wird, welche nicht reaktiv mit Wasser sind.

Für den Fall, dass die feste Matrix der Brandschutzmittelzusammensetzung ein hydraulisches Bindemittel umfasst und somit das Brandschutzmittel eine hydraulisch abbindende Zusammensetzung ist, wird bevorzugt eine hydraulisch abbindende Zusammensetzung verwendet, die mindestens ein hydrogel-bildendes Polymer, mindestens ein hydraulisch abbindendes Bindemittel, sowie Wasser enthält wie bereits vorgängig für die hydraulisch abbindende Zusammensetzung der ersten Schicht 1 der Brandschutzbeschichtung beschrieben. Ebenfalls kann die hydraulisch abbindende Zusammensetzung als Brandschutzmittel weitere Zusatz- sowie Zuschlagsstoffe und auch weitere brandschutzhindernde Stoffe wie Fasern enthalten wie bereits vorgängig für die Brandschutzbeschichtung beschrieben.

Besonders vorteilhaft ist eine hydraulisch abbindende Zusammensetzung zur Verwendung als Brandschutzmittel, die als Spritzbeton oder Spritzmörtel vorliegt.

Die Zusammensetzung wird bevorzugt als Brandschutzmittel für den Hoch- und Tiefbau verwendet, insbesondere für Innenbauten von Gebäuden, besonders bevorzugt für den Tunnelbau. Besonders bevorzugt ist die Verwendung eines erfindungsgemässen Brandschutzmittels oder einer erfindungsgemässen Brandschutzbeschichtung für die Auskleidung von Tunnelinnenwänden bei einem Tunnelneubau oder bei der Renovation eines bereits bestehenden Tunnels. Die hydraulisch abbindende Zusammensetzung kann für die Verwendung als Brandschutzmittel in gehärtetem oder noch feuchten Zustand vorliegen. Bevorzugt liegt sie in gehärtetem Zustand vor.

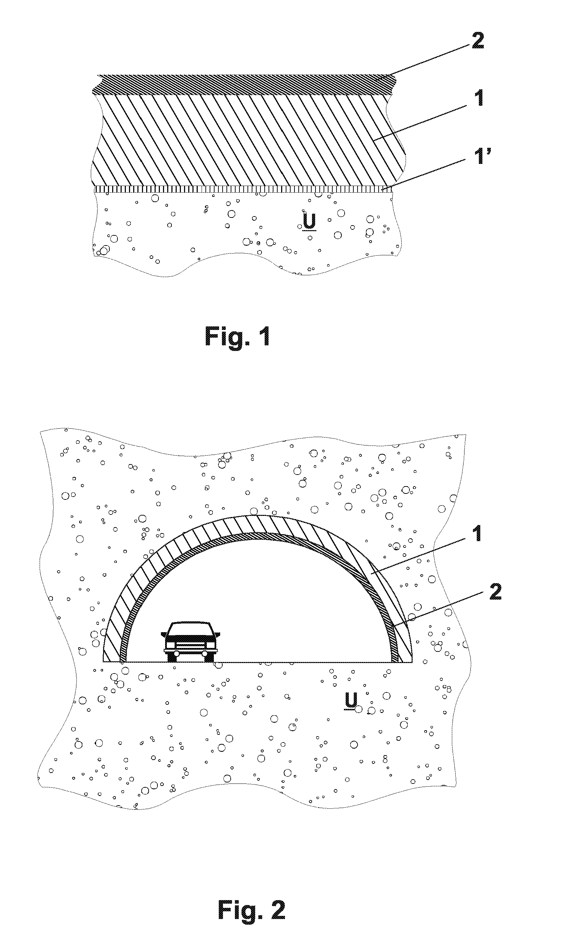

**Fig. 1** zeigt eine Brandschutzbeschichtung auf einem festen mineralischen Untergrund U umfassend mindestens eine erste Schicht 1 einer ausgehärteten hydraulisch abbindenden Zusammensetzung, die Wasser, mindestens ein hydrogel-bildendes Polymer sowie mindestens ein hydraulisch abbindendes Bindemittel umfasst und mindestens eine zweite Schicht 2, die mindestens ein organisches Polymer umfasst. Die zweite Schicht 2 umfassend ein organisches Polymer liegt bevorzugt auf der einem möglichen Brand zugewandten Seite. Wahlweise kann die erfindungsgemässe Brandschutzbeschichtung eine weitere Schicht 1' zwischen dem Untergrund U und der ersten Schicht 1 enthalten.

**Fig. 2** zeigt einen Tunnelquerschnitt mit einer aufgetragenen Brandschutzbeschichtung umfassend einer ersten Schicht 1, die Wasser, mindestens ein hydrogel-bildendes Polymer, sowie mindestens ein hydraulisch abbindendes Bindemittel umfasst und einer zweiten Schicht 2, die mindestens ein organisches Polymer umfasst. Die Brandschutzbeschichtung ist aufgetragen auf einem festen mineralischen Untergrund, der in dieser Ausführungsform Felsgestein umfasst.

### Beispiele

Die Erfindung wird nun anhand von Beispielen näher erläutert. Diese sollen die Erfindung weiter veranschaulichen, den Umfang der Erfindung aber in keiner Weise beschränken.

### 1. Brandversuche

Mit Prüfkörpern aus verschiedenen Zusammensetzungen wurden Brandversuche durchgeführt. Als hydraulisch abbindende Zusammensetzung wurde Sika®MonoTop® 613 (kommerziell erhältlich bei Sika Schweiz AG) verwendet, der vor dem Mischen mit Wasser eine definierte Menge an hydrogel-bildenden Polymere, hier SAP TE vom Typ Copolymer Acrylamid-NaAcrylat, (kommerziell erhältlich bei Melamin, Slovenien) beigemengt wurde (siehe Tabelle 1). Die Menge an SAP TE ist in Tabelle 1 als Gew. % bezogen auf das Gesamtgewicht der Trockenmischung enthaltend Sika®MonoTop® 613 und SAP TE angegeben, sowie zusätzlich als Gew. % bezogen auf das Gewicht an Zement und SAP TE. Je nach Menge an beigemengtem SAP TE wurde der Anteil an zugegebenen Anmachwasser erhöht, da die hydrogel-bildenden Polymere ein Mehrfaches ihres eigenen Gewichts an Flüssigkeit aufnehmen können. Das Anmachwasser ist in Tabelle 1 als Gew. % bezogen auf das Gesamtgewicht der Zusammensetzung enthaltend Sika®MonoTop® 613, SAP TE und Wasser angegeben. Das Anmachwasser wurde unter Rühren zugegeben. Von den Versuchsmischungen enthaltend verschiedene Anteile an SAP TE gemäss Tabelle 1 wurden als Prüfkörper Platten in der Grösse von 16cm x 31cm und einer Dicke von 2 cm gegossen. Ein Teil der Prüfkörper wurde mit einer Hilti CP 671 C-6 Brandschutzbeschichtung (kommerziell erhältlich bei Hilti AG, Schweiz) auf der Seite der Prüfkörper beschichtet, die mit der Flamme in Kontakt kommt. Die Beschichtung wurde mit Hilfe eines Malerrollers auf den Prüfkörper aufgerollt. Nach sieben und 28 Tagen wurden die Platten für 60 Minuten einer Propanflamme aus einem Bunsenbrenner ausgesetzt. Der Abstand vom Bunsenbrenner zum Prüfkörper betrug 19 cm.
Mit einem Temperaturfühler oder Thermoelement wurde der Temperaturverlauf an der Unterseite des Prüfkörpers, d.h. an der Seite, die direkt in Kontakt mit der Flamme ist, sowie an der, der Flamme gegenüberliegenden Oberfläche über 60 Minuten aufgezeichnet. Der Temperaturfühler wurde mittels eines temperaturresistenten Klebers auf die Oberflächen des Prüfkörpers geklebt, und die Daten wurden auf einen Datenlogger (erhältlich bei Tectron Systems AG, Bubikon, Schweiz) übertragen, mit dem der Temperaturfühler verbunden ist. Die Temperatur an der Unterseite des Prüfkörpers bei der Propanflamme betrug die ganze Zeit etwa 1200°C.

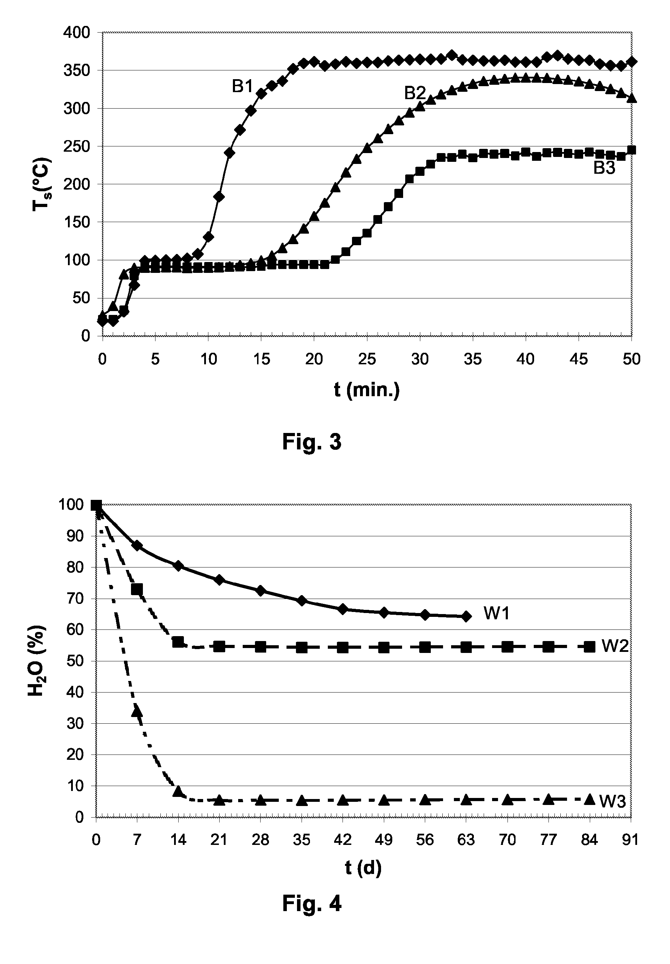

Fig. 3 zeigt eine graphische Darstellung des Temperaturverlaufs über 50 Minuten der Oberflächentemperatur (Tₛ) auf der der Flamme gegenüberliegenden Oberfläche eines 2 cm dicken 7 Tage alten Prüfkörpers einer hydraulisch abbindenden Zusammensetzung ohne hydrogel-bildende Polymere (B1) und mit 5 Gew. % (B2) und 10 Gew. % (B3) hydrogel-bildenden Polymere.
Die erhaltenen Resultate zeigen deutlich dass mit zunehmendem Anteil an SAP TE die Kühl (Dampf) Phase verlängert wird. Unter Dampfphase wird die Zeit verstanden, während der die Temperatur des Prüfkörpers auf der der Flamme gegenüberliegenden Oberfläche konstant im Bereich der Siedetemperatur des Wassers, d.h. bei ungefähr 90°C - 100°C bleibt und während der das im Prüfkörper enthaltene Wasser verdampft. Zusätzlich bleibt die Temperatur einer Zusammensetzung, die hydrogel-bildende Polymere enthält, über längere Zeit tiefer als eine Zusammensetzung ohne hydrogel-bildende Polymere.
Tabelle 1 zeigt in einem weiteren Beispiel unter anderem die Dampfphase, angegeben in Minuten, eines 7 und 28 Tage alten Prüfkörpers mit und ohne Beschichtung sowie mit 0, 2, 5, oder 10 Gew. % SAP TE.

### 2. Wasserrückhaltevermögen

**Fig. 4** zeigt eine graphische Darstellung des Wasserrückhaltevermögens (H₂O) über bis zu 84 Tage (d) einer hydraulisch abbindenden Zusammensetzung. Als hydraulisch abbindende Zusammensetzung wurde Sika®MonoTop® 613 (kommerziell erhältlich bei Sika Schweiz AG) enthaltend 10% SAP TE (kommerziell erhältlich bei Melamin, Slovenien) und 51 Gew. % Wasser bezogen auf das Gesamtgewicht der Zusammensetzung verwendet. Es wurden Platten in der Grösse von 16x31 cm und einer Dicke von 2 cm gegossen. Einige Platten wurde 24 Stunden nach Anmachen der ersten Schicht mit einer Hilti CP 671 C-6 (kommerziell erhältlich bei Hilti AG, Schweiz) Brandschutzbeschichtung beschichtet, die mit Hilfe eines Malerrollers in einer Dicke von etwa 200µm aufgerollt wurde, um das Wasserrückhaltevermögen zu verbessern. Die Proben wurden alle sieben Tage gewogen und aufgrund des Wasserverlustes wurde das Wasserrückhaltevermögen bestimmt (Fig. 4). Das Wasserrückhaltevermögen der Zusammensetzung in Gew.% bezogen auf das anfänglich zugegebene Wasser wurde während 84 Tagen gemessen. Die Resultate wurden mit einem herkömmlichen Brandschutzmörtel, mit KBS Mortar (kommerziell erhältlich bei der Firma Grünau Illertissen GmbH, Deutschland) verglichen. **W1** zeigt die Resultate eines Prüfkörpers mit 10% SAP TE und mit Brandschutzbeschichtung, **W2** zeigt das Wasserrückhaltevermögen des Prüfkörpers mit 10% SAP TE ohne Brandschutzbeschichtung, und **W3** zeigt das Wasserrückhaltevermögen eines herkömmlichen Brandschutzmörtels, von KBS Mortar.
Die Resultate zeigen, dass hydraulisch abbindende Zusammensetzungen enthaltend hydrogel-bildende Polymere länger Wasser speichern können als herkömmliche Brandschutzmörtel. Noch besser fallen die Resultate aus, wenn die hydraulisch abbindende Zusammensetzung mit einer zweiten Schicht, vorzugsweise einer Brandschutzbeschichtung, beschichtet wird (siehe Fig. 4).

### 3. Druckfestigkeiten

Von den diversen Versuchsmischungen wurden Prismen in der Grösse 4x4x16cm gegossen. Bei 23°C und 50% rel. Luftfeuchtigkeit wurde nach 24 Stunden (h) die Druckfestigkeit gemäss der Norm DIN EN 196, Teil 1 bestimmt (siehe Tabelle 1).

**Tabelle 1**

| **Sika®MonoTop® 613 (SMT)** | **SMT + 0 Gew.% SAP TE** | **SMT + 2 Gew.% SAP TE** | **SMT + 5 Gew.% SAP TE** | **SMT + 10 Gew.% SAP TE** |
|---|---|---|---|---|
| Menge SAP TE in Gew.% bezogen auf Anteil Zement | 0 | 6 | 15.1 | 30.3 |
| Anmachwasser (Gew. % bezogen auf gesamte Zusammensetzung) | 12.3 | 25.7 | 40.1 | 51 |
| Beladung von SAP TE mit Wasser (x-fache ihres Eigengewichts) | - | 6.7 | 5.6 | 3.8 |
| Druckfestigkeit 24/h (N/mm²) | 26,9 | 2,0 | 0,1 | 1,3 (48h) |
| Dampfphase 7d (Min.) unbeschichtet | 4 | 8 | 19 | 25 |
| Dampfphase 28d (Min.) unbeschichtet | 4 | 6 | 5 | 8 |
| Dampfphase 7d (Min.) beschichtet mit Brandschutzbeschichtung | 6 | 14 | 18 | 27 |
| Dampfphase 28d (Min.) beschichtet mit Brandschutzbeschichtung | 8 | 6 | 19 | 13 |

Selbstverständlich ist die Erfindung nicht auf die gezeigten und beschriebenen Ausführungsbeispiel beschränkt. Es ist offensichtlich, dass weitere Modifikationen, Kombinationen und Abänderungen der vorliegenden Erfindung möglich sind.

### Bezugszeichen

- U: mineralischer Untergrund
- 1: erste Schicht
- 1': weitere Schicht zwischen Untergrund U und erster Schicht 1
- 2: zweite Schicht

## Patentansprüche

1. Brandschutzbeschichtung auf einem festen mineralischen Untergrund (U) umfassend
- mindestens eine erste Schicht (1) einer ausgehärteten hydraulisch abbindenden Zusammensetzung, die Wasser, mindestens ein hydrogel-bildendes Polymer, sowie mindestens ein hydraulisch abbindendes Bindemittel umfasst und
- mindestens eine zweite Schicht (2), die mindestens ein organisches Polymer umfasst.

2. Brandschutzbeschichtung nach Anspruch 1, **dadurch gekennzeichnet, dass** das hydrogel-bildende Polymer der ersten Schicht (1) in einer solchen Menge eingesetzt werden, dass sein Anteil, bezogen auf das Trockengewicht der hydraulisch abbindende Zusammensetzung 0.01 bis 10 Gew.-% beträgt.

3. Brandschutzbeschichtung nach Anspruch 1 oder 2, **dadurch gekennzeichnet, dass** das hydrogel-bildende Polymer ein vernetztes Polymer mit Säuregruppen ist.

4. Brandschutzbeschichtung nach Anspruch 3, **dadurch gekennzeichnet, dass** das hydrogel-bildende Polymer Acrylsäure als Monomer enthält.

5. Brandschutzbeschichtung nach einem der Ansprüche 1 bis 4, **dadurch gekennzeichnet, dass** das organische Polymer der zweiten Schicht (2) ein organisches Polymer ist, welches durch radikalische Polymerisation oder Additionspolymerisation von Monomeren oder Oligomeren erhalten wird.

6. Brandschutzbeschichtung nach einem der Ansprüche 1 bis 5, **dadurch gekennzeichnet, dass** das hydraulisches Bindemittel Zement und/oder Gips ist.

7. Brandschutzbeschichtung nach einem der Ansprüche 1 bis 6, **dadurch gekennzeichnet, dass** die erste Schicht (1) einen Betonverflüssiger oder Betonverdicker enthält.

8. Brandschutzbeschichtung nach einem der Ansprüche 1 bis 7, **dadurch gekennzeichnet, dass** die zweite Schicht (2) zusätzlich mindestens ein zumindest teilweise mit Wasser beladenes hydrogel-bildendes Polymer umfasst.

9. Verfahren zur Herstellung von einer Brandschutzbeschichtung nach einem der Ansprüche 1 bis 8, wobei zur Herstellung der ersten Schicht
(1) das hydrogel-bildende Polymer und das hydraulische Bindemittel mit Wasser vermengt wird, die erste Schicht (1) im nassen Zustand auf den festen Untergrund (U) aufgetragen wird, und die zweite Schicht (2) auf die erste Schicht (1) aufgetragen wird.

10. Verfahren nach Anspruch 9, wobei die zweite Schicht (2) auf die erste Schicht (1) aufgetragen wird, wenn die erste Schicht (1) noch nicht ausgehärtet ist.

11. Verwendung einer Zusammensetzung umfassend mindestens ein zumindest teilweise mit Wasser beladenes hydrogel-bildendes Polymer sowie mindestens eine feste Matrix als Brandschutzmittel, insbesondere für den Hoch- und/oder Tiefbau.

12. Verwendung nach Anspruch 11, **dadurch gekennzeichnet, dass** die feste Matrix ein hydraulisches Bindemittel umfasst.

13. Verwendung nach Anspruch 12, **dadurch gekennzeichnet, dass** die Zusammensetzung als Spritzbeton oder Spritzmörtel vorliegt.

14. Verwendung nach einem der Ansprüche 11 bis 13, **dadurch gekennzeichnet, dass** das Brandschutzmittel in gehärtetem Zustand vorliegt.

15. Verwendung nach Anspruch 11, **dadurch gekennzeichnet, dass** die feste Matrix ein organisches Polymer ist.

16. Verwendung nach Anspruch 11, **dadurch gekennzeichnet, dass** die Zusammensetzung eine Brandschutzbeschichtung nach einem der Ansprüche 1 bis 8 ist.
